**Europäisches Patentamt**

**European Patent Office**

**Office européen des brevets**

(19)

(11) Veröffentlichungsnummer: **0 064 134**

**B1**

(12)

# EUROPÄISCHE PATENTSCHRIFT

(45) Veröffentlichungstag der Patentschrift:
15.01.86

(51) Int. Cl.⁴: **G 01 P 13/04**

(21) Anmeldenummer: **82101615.1**

(22) Anmeldetag. 03.03.82

(54) Frequenz-Spannungswandler für ein Digital-Tachometer.

(30) Priorität: 16.04.81 DE 3115497

(43) Veröffentlichungstag der Anmeldung:
10.11.82 Patentblatt 82/45

(45) Bekanntmachung des Hinweises auf die Patenterteilung:
15.01.86 Patentblatt 86/3

(84) Benannte Vertragsstaaten:
AT CH FR GB IT LI NL SE

(56) Entgegenhaltungen:
DE-A-2 820 821
FR-A-2 312 886
US-A-3 819 268

IBM TECHNICAL DISCLOSURE BULLETIN, Band 14, Nr. 12, Mai 1972, Seiten 3672,3673, New York, USA, H.C. JACKSON:"Logical motion and direction detection"

**Die Akte enthält technische Angaben, die nach dem Eingang der Anmeldung eingereicht wurden und die nicht in dieser Patentschrift enthalten sind.**

(73) Patentinhaber: **Dr. Johannes Heidenhain GmbH, Nansenstrasse 17, D-8225 Traunreut (DE)**

(72) Erfinder: **Schmitt, Walter, Ing. (grad.), Hochgernstrasse 22, D-8225 Traunreut (DE)**

**Beschreibung**

Die Erfindung betrifft ein Tachometer gemäß dem Oberbegriff des Anspruches 1.

Tachometer in Form von Gleichstrom-Tachogeneratoren, die als Drehzahlgeber nach dem Dynamoprinzip arbeiten, sind bereits bekannt.

In der Druckschrift IBM Technical Disclosure Bulletin, Band 14, Nr. 12, Mai 1972, S. 3672, 3673, New York, US, H.C. Jackson: "Logical motion and direction detection" ist ein logisches Netzwerk zur Bestimmung von Richtungs- und Weginformationen aus zwei Ausgangssignalen eines motorgetriebenen Digitaltachometers beschrieben. Die beiden Ausgangssignale werden jeweils einer bistabilen Kippstufe des logischen Netzwerkes zur Speicherung ihrer Signalzustände zugeführt. Aus dem Vergleich einer nachfolgenden Änderung eines Signalzustandes infolge der Motordrehung mit den gespeicherten Signalzuständen wird am Ausgang des logischen Netzwerkes eine Richtungsinformation und eine inkrementale Weginformation ausgegeben.

Der US-PS 3 819 268 entnimmt man eine Einrichtung zur Geschwindigkeitsbestimmung einer Linearbewegung mittels der beiden Ausgangssignale einer Positionsmeßeinrichtung. Eines der beiden um 90° phasenverschobenen Ausgangssignale wird mittels eines Differenziergliedes differenziert und anschließend mitsamt seinem invertierten Signal in Abhängigkeit von der Richtung der Linearbewegung positiv oder negativ mittels zweier Schaltstufen gleichgerichtet, die vom anderen Ausgangssignal gesteuert werden. Das gleichgerichtete kombinierte Signal wird einem Amplitudendetektor und einem Filter zur Erzeugung eines Geschwindigkeitssignals zugeleitet.

Aus der Druckschrift der Firma DR. JOHANNES HEIDENHAIN GmbH "Inkrementale Drehgeber ROD, Programm 80/81", 7/80 ist eine Einrichtung der im Oberbegriff des Anspruches 1 genannten Art bekannt. Bei dieser Mehrfachauswertung der beiden um 90° phasenverschobenen Signale des inkrementalen Gebers mittels eines Richtungsdiskriminators erhält man eine elektronische Unterteilung des Teilungsintervalls dieser beiden Signale um den Faktor dieser Mehrfachauswertung. Diese unterteilten phasenverschobenen Signale werden einer Auswerteschaltung zugeführt.

Der Erfindung liegt die Aufgabe zugrunde, bei einem derartigen Tachometer den nutzbaren Frequenzbereich zu erweitern. Diese Aufgabe wird erfindungsgemäß durch die kennzeichnenden Merkmale der Ansprüche 1 und 2 gelöst.

Die mit der Erfindung erzielten Vorteile bestehen insbesondere darin, daß der nutzbare Frequenzbereich zu niedrigeren Frequenzen hin mit einfachen Mitteln um den Faktor der Mehrfachauchswertung erweitert werden kann.

Weitere vorteilhafte Ausbildungen entnimmt man den Unteransprüchen.

Ein Ausführungsbeispiel der Erfindung ist in der Zeichnung dargestellt und wird im folgenden näher erläutert.

Es zeigen

Figur 1 eine Schaltungsanordnung eines Frequenz-Spannungswandlers für ein Tachometer nach der Erfindung,

Figur 2 eine graphische Darstellung des Signalverlaufs an der oberen Frequenzgrenze und

Figur 3 eine graphische Darstellung des Signalverlaufs an der unteren Frequenzgrenze.

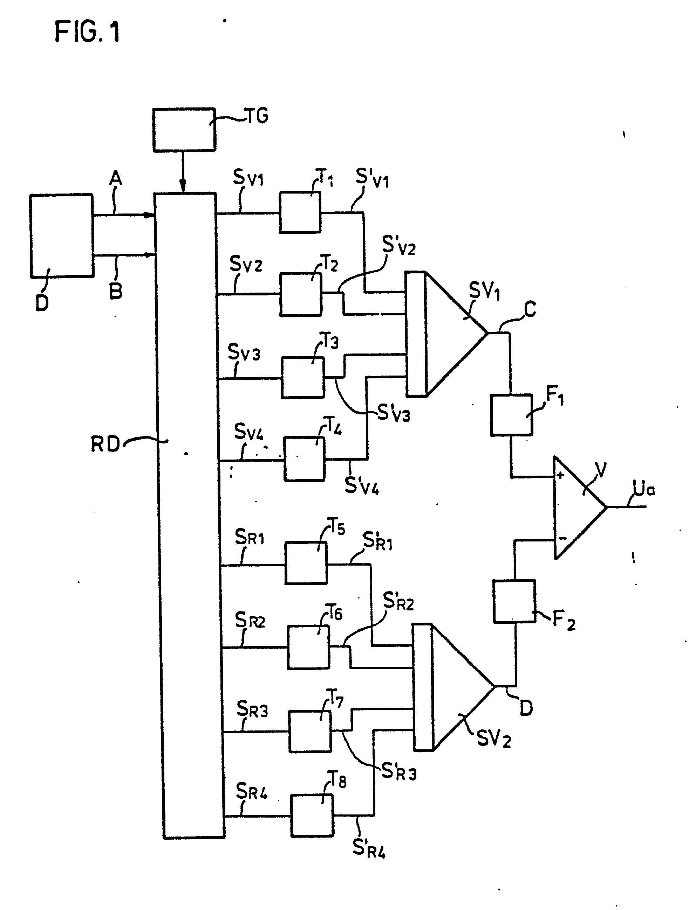

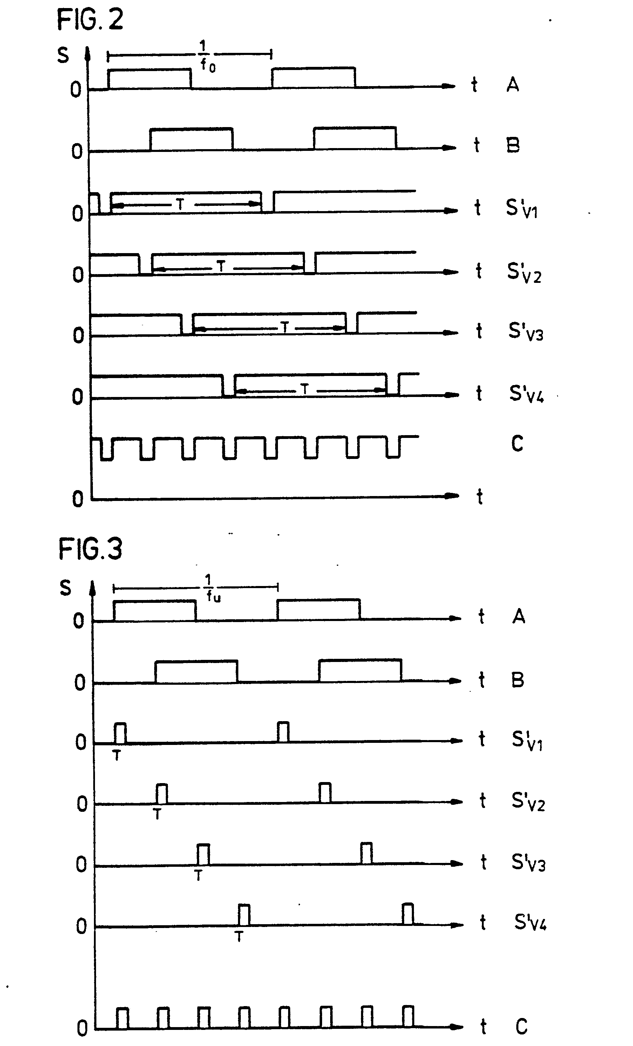

Gemäß Figur 1 werden die beide um 90° gegeneinander verschobenen Ausgangssignale A, B eines Drehgebers D einem Richtungsdiskriminator RD zugeführt. Die Vorwärtsausgangssignale $S_{V1}$ - $S_{V4}$ (Mehrfachauswertung mit dem Faktor 4) und die Rückwärtsausgangssignale $S_{R1}$ - $S_{R4}$ (Mehrfachauswertung mit dem Faktor 4) des Richtungsdiskriminators RD werden erfindungsgemäß jeweils einer gesonderten Schaltstufe $T_1$ - $T_8$ für Impulse konstanter Energie zugeführt, wobei der zeitliche Spannungsverlauf der Ausgangssignale $S_{V1}'$ - $S_{V4}'$ der Schaltstufen $T_1$ - $T_4$ bei konstanter Belastung in den Figuren 2 und 3 dargestellt ist (die Spannungszeitfläche kann auch durch eine Stromzeitfläche ersetzt werden). Die Vorwärtsausgangssignale $S_{V1}'$ - $S_{V4}'$ der Schaltstufen $T_1$ - $T_4$ werden über einen Summationsverstärker $SV_1$ und über einen Tiefpaßfilter $F_1$ dem nichtinvertierenden Eingang eines Differenzverstärkers V zugeleitet, während die Rückwärtsausgangssignale $S_{R1}'$ - $S_{R4}'$ der Schaltstufen $T_5$ - $T_8$ über einen Summationsverstärker $SV_2$ und einen Tiefpaßfilter $F_2$ dem invertierenden Eingang des Differenzverstärkers V zugeführt werden. Das Ausgangssignal $U_a$ des Verstärkers V ist proportional der Drehzahl f des Drehgebers D. Mit dieser Maßnahme wird der nutzbare Frequenzbereich nach niedrigeren Frequenzen hin um den Faktor 4 der Mehrfachauswertung erweitert.

In Figur 2 sind die Ausgangssignale A, B des Drehgebers D, die Vorwärtsausgangssignale $S_{V1}'$ - $S_{V4}'$ der Schaltstufen $T_1$ - $T_4$ sowie das Ausgangssignal C des Summationsverstärkers $SV_1$ für die obere Frequenzgrenze und in Figur 3 die Ausgangssignale A, B, $S_{V1}'$ - $S_{V4}'$, C für die untere Frequenzgrenze dargestellt. Die konstanten Spannungszeitflächen S . T der Ausgangssignale $S_{V1}'$ - $S_{V4}'$ an der oberen und unteren Frequenzgrenze sind gleich. An der oberen Frequenzgrenze ist die Drehzahl f des Drehgebers D $f_0 = 1/1,1T$ und an der unteren Frequenzgrenze $f_u = 1/16T$. Das Ausgangssignal $U_a$ des Differenzverstärkers V ist proportional der Frequenz f des Drehgebers D: $U_a = S . T . f$. Bei umgekehrtem Drehsinn des Drehgebers D werden die Rückwärtssignale $S_{R1}$-$S_{R4}$ ausgewertet.

In einer weiteren Ausführungsform werden in nicht dargestellter Weise die um 90° gegeneinander verschobenen Ausgangssignale eines Drehgebers einem Richtungsdiskriminator mit einem Richtungsausgang zugeführt. Die Ausgangssignale des Richtungsdiskriminators werden bei einer Mehrfachauswertung erfindungsgemäß jeweils einer gesonderten Schaltstufe für Impulse konstanter Energie zugeführt, deren Ausgangssignale über einen Summationsverstärker und einen Tiefpaßfilter einem Verstärker zugeleitet werden, dessen Eingang zum Umschalten des Vorzeichens der Verstärkung mit dem Richtungsausgang des Richtungsdiskriminators verbunden ist.

Die Schaltstufen $T_1$ - $T_8$ sind vorzugsweise in CMOS-Technologie aufgebaut. Des weiteren können der Richtungsdiskriminator RD und die Schaltstufen $T_1$ - $T_8$ gemeinsam aus einer integrierten Logik-Gatteranordnung bestehen. Ferner kann auch der Richtungsdiskriminator RD durch einen programmierbaren Nur-Lesespeicher (PROM) gebildet werden.

Der Differenzverstärker V bzw. der Verstärker können als Spannungsquelle oder als Stromquelle ausgebildet sein. Der Stromquellenausgang besitzt den Vorteil, daß Offsetspannungen des Tachometers keine Fehlerauswirkungen haben und somit auch bei relativ kleinen Versorgungsspannungen große Drehzahlbereiche (ca. 1:6000) ermöglicht werden. Die Genauigkeit der Kalibrierung kann durch einen Taktgeber TG festgelegt werden, der den Richtungsdiskriminator RD beaufschlagt und die konstante Zeit T festlegt.

**Patentansprüche**

1. Tachometer mit
- einem inkrementalen Geber (D) zur Erzeugung wenigstens zweier gegeneinander phasenverschobener Geberimpulsfolgen (A, B) mit jeweils gleicher, von der Bewegung der inkrementalen Teilung des Gebers abhängenden Impulsfolgefrequenz,
- einem Richtungsdiskriminator (RD) zur Erzeugung einer ersten Gruppe von Impulsfolgen ($S_{V1}$-$S_{V4}$) aus den Geberimpulsfolgen (A, B) für eine erste Bewegungsrichtung der inkrementalen Teilung und einer zweiten Gruppe von Impulsfolgen ($S_{R1}$-$S_{R4}$) für eine zweite Bewegungsrichtung, wobei die Impulsfolgen jeder der beiden Gruppen jeweils die Impulsfolgefrequenz der Geberimpulsfolgen haben, aber jeweils um einen Bruchteil der Periode der Geberimpulsfolgen gegeneinander phasenverschoben sind,
und
- einer Auswerteschaltung ($T_1$-$T_8$, $SV_1$, $SV_2$, $F_1$, $F_2$, V) für die Impulsfolgen der beiden Gruppen,
dadurch gekennzeichnet, daß
- die Auswerteschaltung einen Frequenz-Spannungs-Wandler enthält, der folgende Bestandteile aufweist:
a) jeweils eine Schaltstufe ($T_1$ -$T_8$) für jede Impulsfolge ($S_{V1}$ -$S_{V4}$, $S_{R1}$-$S_{V4}$) jeder Gruppe zur Umformung der Impulse dieser Impulsfolgen in Impulse mit konstentem Flächeninhalt,
b) jeweils eine Summierschaltung ($SV_1$, $SV_2$) für jede Gruppe der umgeformten Impulsfolgen ($S'_{V1}$-$S'_{V4}$, $S'_{R1}$ -$S'_{R4}$), sowie
c) einen Differenzverstärker (V), dessen einer Eingang über ein erstes Tiefpaßfilter ($F_1$) mit dem Ausgang der einen Summierschaltung ($S_{V1}$) und dessen anderer Eingang über ein zweites Tiefpaßfilter ($F_2$) mit dem Ausgang der anderen Summierschaltung ($S_{V2}$) verbunden ist.

2. Tachometer mit
- einem inkrementalen Geber zur Erzeugung wenigstens zweier gegeneinander phasenverschobener Geberimpulsfolgen mit jeweils gleicher, von der Bewegung der inkrementalen Teilung des Gebers abhängenden Impulsfolgefrequenz,
- einem Richtungsdiskriminator zur Erzeugung einer Gruppe von aus den Geberimpulsfolgen abgeleiteten weiteren Impulsfolgen, welche jeweils die Impulsfolgefrequenz der Geberimpulsfolgen haben, aber jeweils um einen Bruchteil der Periode der Geberimpulsfolgen gegeneinander phasenverschoben sind, welcher Richtungsdiskriminator einen Richtungsausgang für ein die Bewegungsrichtung repräsentierendes Signal aufweist und
- einer Auswerteschaltung für die weiteren Impulsfolgen,
dadurch gekennzeichnet, daß
- die Auswerteschaltung einen Frequenz-Spannungs-Wandler enthält, der folgende Bestandteile aufweist:
a) jeweils eine Schaltstufe für jede der weiteren Impulsfolgen zur Umformung der Impulse dieser Impulsfolgen in Impulse mit konstantem Flächeninhalt,
b) eine Summierschaltung für die umgeformten weiteren Impulsfolgen,
c) ein an den Ausgang der Summierschaltung angeschlossenes Tiefpaßfilter, sowie
d) einen an das Tiefpaßfilter angeschlossenen Verstärker, der einen an den Richtungsausgang des Richtungsdiskriminators angeschlossenen Umschalteingang für das Vorzeichen der Verstärkung aufweist.

3. Tachometer nach Anspruch 1 oder 2, dadurch gekennzeichnet, daß die Schaltstufen ($T_1$-$T_8$) in CMOS-Technologie aufgebaut sind.

4. Tachometer nach Anspruch 1 oder 2, dadurch gekennzeichnet, daß der Richtungsdiskriminator (RD) und die Schaltstufen ($T_1$-$T_8$) aus einer integrierten Logik-Gatteranordnung bestehen.

5. Tachometer nach Anspruch 1 oder 2, dadurch gekennzeichnet, daß der Richtungsdiskriminator (RD) durch einen programmierbaren Nur-Lesespeicher (PROM) gebildet ist.

6. Tachometer nach Anspruch 1 oder 2, dadurch gekennzeichnet, daß der Richtungsdiskriminator (RD) an einen als Zeitbasis dienenden Taktgeber (TG) angeschlossen ist.

## Claims

1. Tachometer comprising
- an incremental transducer (D) for generating at least two transducer pulse sequences (A, B), which are shifted in phase with respect to each other and which in each case have the same pulse repetition rate which is a function of the movement of the incremental division of the transducer,
- a directional discriminator (RD) for generating a first group of pulse sequences ($S_{V1}$- $S_{V4}$) from the transducer pulse sequences (A, B) for a first direction of movement of the incremental division and a second group of pulse sequences ($S_{R1}$-$S_{R4}$) for a second direction of movement, in which arrangement the pulse sequences of each of the two groups have in each case the pulse repetition rate of the transducer pulse sequences but are in each case shifted in phase with respect to each other by a fraction of the period of the transducer pulse sequences, and
- an evaluating circuit ($T_1$-$T_8$, SV$_1$, SV$_2$, F$_1$, F$_2$, V) for the pulse sequences of the two groups, characterized in that
- the evaluating circuit contains a frequency/voltage converter which is provided with the following components:
a) one switching stage ($T_1$-$T_8$) each for each pulse sequence ($S_{V1}$-$S_{V4}$, $S_{R1}$-$S_{R4}$) of each group for converting the pulses of these pulse sequences into pulses having a constant area,
b) one summing circuit (SV$_1$, SV$_2$) each for each group of the converted pulse sequences ($S'_{V1}$-$S'_{V4}$, $S'_{R1}$-$S'_{R4}$), and
c) a differential amplifier (V), one input of which is connected via a first low-pass filter (F$_1$) to the output of one summing circuit (SV$_1$) and the other input of which is connected via a second low-pass filter (F$_2$) to the output of the other summing circuit (SV$_2$).

2. Tachometer comprising
- an incremental transducer for generating at least two transducer pulse sequences which are shifted in phase with respect to each other and which in each case have the same pulse repetition rate which is a function of the movement of the incremental division of the transducer,
- a directional discriminator for generating a group of further pulse sequences which are derived from the transducer pulse sequences and which in each case have the pulse repetition rate of the transducer pulse sequences but are in each case shifted in phase with respect to each other by a fraction of the period of the transducer pulse sequences, which directional discriminator is provided with a directional output for a signal representing the direction of movement, and
- an evaluating circuit for the further pulse sequences, characterized in that
- the evaluating circuit contains a frequency/voltage converter which is provided with the following components:
a) in each case one switching stage for each of the further pulse sequences for transforming the pulses of these pulse sequences into pulses having a constant area,
b) a summing circuit for the converted further pulse sequences,
c) a low-pass filter which is connected to the output of the summing circuit, and
d) an amplifier which is connected to the low-pass filter and which is provided with a switching input, which is connected to the directional output of the directional discriminator, for the sign of the amplification.

3. Tachometer according to Claim 1 or 2, characterized in that the switching stages ($T_1$-$T_8$) are constructed in CMOS technology.

4. Tachometer according to Claim 1 or 2, characterized in that the directional discriminator (RD) and the switching stages ($T_1$-$T_8$) consist of an integrated logic gate arrangement.

5. Tachometer according to Claim 1 or 2, characterized in that the directional discriminator (RD) is formed by a programmable read-only memory (PROM).

6. Tachometer according to Claim 1 or 2, characterized in that the directional discriminator (RD) is connected to a clock generator (TG) which serves as a time base.

## Revendications

1. Tachymètre, comportant
- un capteur incrémentiel (D) pour produire au moins deux suites d'impulsions (A, B) mutuellement déphasées ayant chacune la même fréquence de répétition d'impulsions dépendant du mouvement de la graduation incrémentielle du capteur,
- un discriminateur de direction (RD) pour produire un premier groupe de suites d'impulsions (S$_{V1}$ S$_{V4}$) a partir des suites d'impulsions (A, B) fournies par le capteur pour une première direction de mouvement de la graduation incrémentielle et un deuxième groupe de suites d'impulsions (S$_{R1}$-S$_{R4}$) pour une deuxième direction de mouvement, les suites d'impulsions de chacun des deux groupes ayant chacune la fréquence de répétition d'impulsions des suites d'impulsions du capteur mais étant à chaque fois mutuellement déphasées d'une fraction de la période des suites d'impulsions du capteur, et
- un circuit d'interprétation (T$_1$-T$_8$, SV$_1$, SV$_2$, F$_1$, F$_2$, V) pour les suites d'impulsions des deux groupes,
caractérisé en ce que
- le circuit d'interprétation comporte un convertisseur fréquence-tension présentant les composants suivants
a) pour chaque suite d'impulsions (S$_{V1}$-S$_{V4}$, S$_{R1}$-S$_{R4}$) de chaque groupe, un étage (T$_1$-T$_8$) pour transformer les impulsions de ces suites en impulsions à aire constante,
b) pour chaque groupe des suites d'impulsions

$(S'_{V1}-S'_{V4}, S'_{R1}-S'_{R4})$ transformées, un circuit additionneur $(SV_1, SV_2)$, et

c) un amplificateur différentiel (V) dont une entrée est reliée, par un premier filtre passe-bas $(F_1)$, à la sortie du premier circuit additionneur $(SV_1)$ et dont l'autre entrée est reliée, par un deuxième filtre passe-bas $(F_2)$, à la sortie de l'autre circuit additionneur $(SV_2)$.

2. Tachymètre comportant:

- un capteur incrémentiel pour produire au moins deux suites d'impulsions mutuellement déphasées ayant chacune la même fréquence de répétition d'impulsions qui dépend du mouvement de la graduation incrémentielle du capteur,

- un discriminateur de direction pour produire un groupe d'autres suites d'impulsions dérivées des suites d'impulsions du capteur et ayant même fréquence que celles-ci, mais étant mutuellement déphasées d'une fraction de la période des suites d'impulsions du capteur, ce discriminateur de direction ayant une sortie "direction" pour un signal représentatif de la direction du mouvement, et

- un circuit d'interprétation pour lesdites autres suites d'impulsions,

caractérisé en ce que

- le circuit d'interprétation comporte un convertisseur fréquence-tension présentant les composants suivants

a) pour chacune desdites autres suites d'impulsions, un étage pour transformer les impulsions de ces suites en impulsions à aire constante,

b) un circuit additionneur pour lesdites autres suites d'impulsions transformées,

c) un filtre passe-bas raccordé à la sortie du circuit additionneur, et

d) un amplificateur raccordé au filtre passe-bas, cet amplificateur présentant, raccordée à la sortie "direction" du discriminateur de direction, une entrée de commutation pour le signe de l'amplification.

3. Tachymètre selon la revendication 1 ou 2, caractérisé en ce que lesdits étages $(T_1-T_8)$ sont réalisés en technologie CMOS.

4. Tachymètre selon la revendication 1 ou 2, caractérisé en ce que le discriminateur de direction (RD) et lesdits étages $(T_1-T_8)$ sont constitués par un agencement intégré de portes logiques.

5. Tachymètre selon la revendication 1 ou 2, caractérisé en ce que le discriminateur de direction (RD) est constitué par une mémoire morte programmable (PROM).

6. Tachymètre selon la revendication 1 ou 2, caractérisé en ce que le discriminateur de direction (RD) est raccordé à un émetteur d'impulsions d'horloge (TG) servant de base de temps.

# FIG. 1

0 064 134

FIG. 2

FIG. 3

3